# EUROPÄISCHE PATENTANMELDUNG

(11) **EP 4 757 141 A1**
(43) Veröffentlichungstag der Anmeldung: **10.06.2026**
(21) Anmeldenummer: 24217150.2
(22) Anmeldetag: 03.12.2024
(51) Int. Cl.: H02K 11/33, H02K 5/16, H02K 5/22

(54) **ADAPTER ZUR KONTAKTIERUNG EINER GEHÄUSEINTEGRIERTEN UMRICHTEREINHEIT**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Die vorliegende Erfindung betrifft eine elektrische Maschine (10), insbesondere eine Drehstromasynchron- oder eine Drehstromsynchronmaschine, und ein Verfahren zur Montage einer elektrischen Maschine (10). Diese Maschine umfasst einen Stator (2) mit Wicklungsleitungen (22), deren Leitungsenden in Steckkontaktiereinheiten (12) münden, die in einem gehäuseintegrierten Adapter (1) untergebracht sind. Darüber hinaus beinhaltet die Maschine eine gehäuseintegrierte Umrichtereinheit (3), insbesondere eine im Lagerschild integrierte Umrichtereinheit (3), die entsprechende Steckkontaktiergegenstücke (13) aufweist. Es wird ein Herstellungsverfahren für diese elektrische Maschine (10) angegeben, in dem zunächst die Leitungsenden der Wicklungsleitungen (22) des Stators (2) an die Steckkontaktiereinheiten (12) im Adapter (1) angebracht werden. Anschließend wird der Stator (2) mit dem Adapter (1) axial in das Gehäuse (5) eingefügt oder eingepresst. Danach wird die Umrichtereinheit (3) mit den Steckkontaktiergegenstücken (13) axial in das Gehäuse (5) eingeschoben, bis eine Endposition erreicht ist, in der die Steckkontaktiereinheiten (12) und die Steckkontaktiergegenstücke (13) so zusammengefügt sind, dass der Stator (2) und die Umrichtereinheit (3) kontaktiert sind.

## Beschreibung

Die vorliegende Erfindung betrifft eine elektrische Maschine, insbesondere eine Drehstromasynchron- oder eine Drehstromsynchronmaschine, und ein Verfahren zur Montage einer elektrischen Maschine.

### Stand der Technik

Bisher wird die Statorwicklung einer elektrischen Maschine, wie Drehstromasynchron- und Drehstromsynchronmotoren, durch verschiedene Kontaktierungsmethoden wie Crimpen, Löten oder Schweißen mit Anschlussleitungen verbunden, die typischerweise Kabelschuhe an den Enden haben. Diese Anschlussleitungen werden zur Kontaktierung mit der notwendigen Spannungsversorgung manuell durch eine Gehäuseöffnung zu einem Klemmenbrett im Anschlusskasten geführt.

Für drehzahlveränderbare dynamoelektrische Maschinen, wie Elektromotoren, vor allem Synchron-, Asynchron-, und Reluktanzmotoren werden Frequenzumrichter zum Einstellen der gewünschten Drehzahl benötigt.

Bei dezentralen, insbesondere wandmontierten Umrichter-Ausführungen in Schaltschränken, erfolgt die Verbindung zwischen Umrichter und Motor über eine separate Zuleitung zum Klemmenbrett, während bei sogenannten integrierten Umrichter-Ausführungen die Anschlussleitungen direkt durch die Gehäuseöffnung zum Umrichter geführt werden. Bei diesen bisher im Stand der Technik als integrierte Umrichter bezeichneten Lösungen sind die Umrichtereinheiten auf eine Gehäuseöffnung der elektrischen Maschine aufgesetzt. Alternativ wird von motormontierten Umrichtern gesprochen. Auch hier werden die Anschlussleitungen zumeist manuell herausgeführt. Diese Vorgehensweise führt zu hohen Montagekosten, insbesondere bei kleineren Baugrößen, und beeinträchtigt die Kompaktheit des Antriebssystems.

Zusätzliche Leitungen für thermische Überwachung oder andere Einbauteile werden ebenso manuell durch die Gehäuseöffnung geführt, was den manuellen Aufwand noch weiter erhöht. Diese Methoden erfordern die Verwendung von Aderendhülsen und die Kontaktierung mittels Lüsterklemmen oder Cage-Clamp-Kontakten, was ebenfalls die Komplexität und die Kosten erhöht.

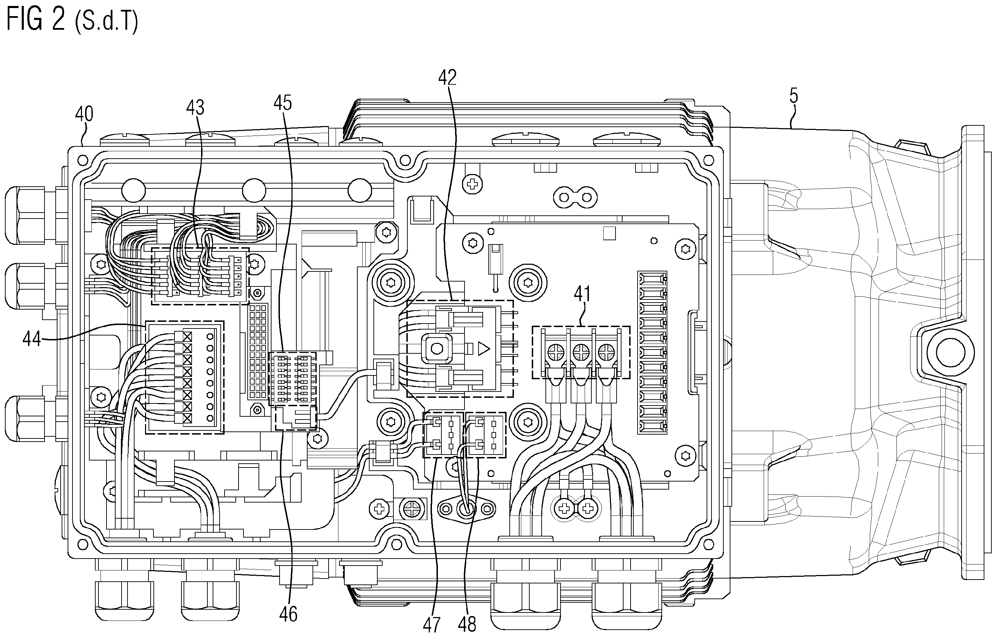

Bisher, wie beispielsweise in Figur 2 illustriert, erfolgt also die Kontaktierung der Energieleitung, der Signalleitungen und der Umrichteranschlüsse auf einem Klemmbrett im Klemmenkasten am Motorgehäuse. Diese Ausführung der Montage direkt am Gehäuse benötigt viel Bauraum und macht den Antrieb vergleichsweise groß und schwer.

Die bestehenden Lösungen schränken des Weiteren die Modularität und Austauschbarkeit der Antriebssysteme ein und führen zu einem erhöhten Platzbedarf und manuellen Arbeitsaufwand beim Anschluss der Komponenten. Ein weiterer Nachteil der bestehenden Methoden ist die Notwendigkeit, jede Komponente einzeln zu verbinden, was sowohl zeitaufwendig als auch anfällig für Fehler ist. Alternativmaterialien oder alternative Designs für die Kontaktierung wurden bislang kaum genutzt, da die bestehenden Methoden auf Industriestandards und etablierten Praktiken basieren.

Ansätze, bei denen Motor und Umrichter axial hintereinander angeordnet werden, sind beispielsweise aus der EP 0 854 560 A1 bekannt. Bisher jedoch benötigen Ausführungen von Umrichtern direkt am Motor viel Bauraum, da das Lager zwischen Motor und Umrichter ist. Dies macht den Antrieb vergleichsweise groß und schwer.

Aus der DE 10 2004 031 399 A1 beispielsweise ist ein Umrichtermotor mit einem eigenbelüfteten Elektromotor und einem Frequenzumrichter bekannt, wobei in einem topfförmigen Lagerschild Bauteile des Frequenzumrichters am Boden des topfförmigen Lagerschildes angeordnet sind. Auch dieser Antrieb benötigt vergleichsweise viel Bauraum.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung eine erhöhte Kompaktheit bei gleichzeitig vereinfachter Montage ermöglichen.

Diese der vorliegenden Erfindung zugrunde liegenden Aufgaben werden durch eine elektrische Maschine gemäß dem Patentanspruch 1 gelöst. Die auf die Montage bezogene Aufgabe wird gelöst durch ein Herstellungsverfahren gemäß Patentanspruch 10. Vorteile und Ausgestaltungen der Erfindung, die einzeln oder in Kombination miteinander einsetzbar sind, sind Gegenstand der Unteransprüche.

### Beschreibung der Erfindung

Die erfindungsgemäße elektrische Maschine, insbesondere eine Drehstromasynchron- oder Drehstromsynchronmaschine, ist in einem Gehäuse untergebracht. Die elektrische Maschine umfasst einen Stator mit Wicklungsleitungen, deren Leitungsenden in Steckkontaktiereinheiten in einem gehäuseintegrierten Adapter münden. Zudem ist eine gehäuseintegrierte Umrichtereinheit vorhanden, insbesondere eine lagerschildintegrierte Umrichtereinheit, die Steckkontaktiergegenstücke aufweist.

Die Vorteile liegen zum einen in der baulichen Flexibilität. Durch die Verwendung von Steckkontakten anstelle von Klemmen ist ein sehr einfaches Zusammenfügen des Stators und des Umrichters im Gehäuseraum möglich. Zudem liegt ein Vorteil in der Stabilität. Die Fügeeigenschaften der Stator- sowie der Umrichtereinheit können optimiert werden. Der Adapter ermöglicht eine Reduzierung auf im Wesentlichen diese beiden baulichen Komponenten innerhalb des Gehäuses.

Unter Steckkontaktiereinheit und Steckkontaktiergegenstück werden insbesondere Stecker und Buchsen verstanden, wobei Stecker und Buchse auch vertauscht sein können. Stator-Leitungsenden können in Stecker münden und die Buchsen können in der Umrichtereinheit integriert sein oder umgekehrt. Alternativ zu Steckkontakten können auch andere geeignete Kontakte, insbesondere Federkontakte, eingesetzt werden.

Unter einer gehäuseintegrierten Umrichtereinheit ist zu verstehen, dass der Umrichter oder einzelne Komponenten des Umrichters innerhalb des Gehäuses angeordnet ist. Dies bewirkt, dass die elektrische Anbindung auch innerhalb des Gehäuses erfolgt und nicht aus dem Gehäuse herausgeführt wird. Es könnte auch von (Motor)innenraum-positionierter Umrichtereinheit gesprochen werden. Um eine Umrichtereinheit im Gehäuse zu integrieren, kann diese insbesondere an der Gehäuserauminnenwand befestigt sein. Besonders vorteilhaft ist eine lagerschildintegrierte Umrichtereinheit, wie sie beispielsweise in der EP 24199792.3 oder in der EP 24200040.4 vorgeschlagen werden. Auch eine kombinierte Lösung, bei der die Umrichtereinheit teilweise im Gehäuse und teilweise im Lagerschild integriert ist, ist denkbar. Derartige Ausführungsformen einer gehäuseintegrierten Umrichtereinheit können als Ausgangsbasis für die hier vorgeschlagene Adapter-Lösung herangezogen werden.

Unter einem Gehäuse ist die Umbauung der elektrischen Maschine zu verstehen, welche insbesondere Kühlelemente, Befestigungselemente und die Herausführung der Energieleitungen bereitstellt.

Eine weiterer Vorteil ist eine Lösung für die Herausforderung der Bauraumnutzung anzugeben. Besonders bevorzugt sind runde Umrichterausführungen. Bevorzugte Durchmesser richten sich nach dem Statordurchmesser. Dieser kann insbesondere bei circa 10 cm bis 15 cm liegen. Die vorgeschlagene Lösung kann auch für andere Leistungsklassen interessant sein. Insbesondere wird die vorgeschlagene Lösung in Drehstromasynchron- oder Drehstromsynchronmaschinen mit 1 kW bis 15 kW Leistung und Achshöhen von 80 mm bis 160 mm eingesetzt. Auch in Motoren mit bis zu 90 kW Leistung und Achshöhen bis zu 280 mm, kann die Lösung Anwendung finden.

Vorteilhafte Anwendung der Erfindung ist beispielsweise möglich in einem Antrieb, mit mindestens einer dynamoelektrischen rotatorischen Maschine, die in einem Gehäuse angeordnet ist, mit einem in einem Stator angeordneten Wicklungssystem und einem durch einen Luftspalt davon getrennten Rotor, der über mindestens ein Lager eines topfähnlichen Lagerschilds um eine Achse drehbar gelagert ist. Stator und Rotor befinden sich in einem Motorinnenraum. Dazu umfasst ist bevorzugt ein Umrichter, der mindestens einige der folgenden Bauelemente wie Leistungshalbleiter, Drosseln, Kondensatoren, Steuer- und Regeleinheiten sowie Kommunikationseinheiten aufweist und sich in einem Umrichterbauraum befindet, der zumindest abschnittsweise von dem Lagerschild radial umgeben ist. Einige Bauelemente des Umrichters sind mit dem Lagerschild thermisch leitend verbunden, indem insbesondere wärmeintensive Bauelemente des Umrichters an einer inneren Seitenwand des topfähnlichen Lagerschilds angeordnet sind. Bevorzugt ist der Umrichter axial betrachtet zwischen der dynamoelektrischen rotatorischen Maschine und dem Lager des topfähnlichen Lagerschilds angeordnet. Motorinnenraum und Umrichterbauraum sind insbesondere durch ein Abschirmelement getrennt.

In einer vorteilhaften Ausführungsform der erfindungsgemäßen elektrische Maschine, ist der Stator in das Gehäuse eingefügt oder eingepresst. Dies hat den Vorteil, dass eine entsprechende Einpassung des Stators in das Gehäuse geschaffen ist, welche einen vergleichsweise guten Wärmeübergang vom Blechpaket des Stators auf das Gehäuse und optionale Gehäuserippen schafft.

In einer weiteren vorteilhaften Ausführungsform der erfindungsgemäßen elektrische Maschine, stellt der Adapter zur Gehäuseöffnung hin Anschlüsse für die Energieleitungen bereit. Insbesondere stellt der Adapter zur Gehäuseöffnung hin auch Anschlüsse für weitere Signalleitungen bereit. Dies hat den Vorteil, dass kundenseitig nur einmalig die Anschlüsse für die Energieleitungen, wie in Figur 2 mit Bezugszeichen 41 gezeigt, sowie optional auch Signalleitungen, angeschlossen werden. Ein separater Anschluss von Motor und Umrichter ist aber kundenseitig nicht mehr notwendig.

In einer weiteren vorteilhaften Ausführungsform der erfindungsgemäßen elektrischen Maschine weist der Adapter wenigstens eine Fixierungsgeometrie auf, mittels welcher der Adapter am Stator fixiert ist und/oder wenigstens eine Fixierungsgeometrie, mittels welcher der Adapter gehäuseinnenseitig am Gehäuse fixiert ist.

In einer weiteren vorteilhaften Ausführungsform der erfindungsgemäßen elektrischen Maschine weist die lagerschildintegrierte Umrichtereinheit eine Ausnehmung auf, in welcher die Steckkontaktiergegenstücke angebracht sind. Dies wirkt sich positiv auf die Montage und Stabilität aus. Alternativ könnte der umrichterseitige Steckteil auf den Umrichter aufgesetzt sein. Dann wäre die Ausnehmung vielmehr ein Aufbau, ähnlich wie ein zweiter Adapter, welcher auf den Umrichter stirnseitig aufgesetzt ist und das Gegenstück zum statorseitigen Adapter bildet.

In einer weiteren vorteilhaften Ausführungsform der erfindungsgemäßen elektrischen Maschine ist der Adapter in die Ausnehmung in der Umrichtereinheit eingefügt oder eingepresst. Dies hat den Vorteil, dass eine entsprechende Einpassung des Adapters in den Umrichter geschaffen ist, wodurch eine vereinfachte Montage und eine Stabilität für die Kontaktierungen erwirkt wird. In einer weiteren vorteilhaften Ausführungsform der erfindungsgemäßen elektrischen Maschine weisen die Steckkontaktiereinheiten Buchsen, insbesondere Kunststoffbuchsen, auf und die Steckkontaktiergegenstücke Pins, insbesondere Kupferpins, oder die Steckkontaktiereinheiten weisen Pins, insbesondere Kupferpins, auf und die Steckkontaktiergegenstücke Buchsen, insbesondere Kunststoffbuchsen, auf.

Die Statorleitungsenden sind also nicht mit den üblichen Kontaktiermaterialien ausgestattet, wie beispielsweise Kabelschuhen oder Aderendhülsen. Die Kontaktierung innerhalb der Buchse oder des Steckers kann aber bevorzugt über übliche Technologien wie Crimpen, Stecken, Cage-Clampen etc. erfolgen.

In einer weiteren vorteilhaften Ausführungsform der erfindungsgemäßen elektrischen Maschine münden weitere Leitungsenden, insbesondere Leitungsenden von Thermofühlern und/oder Anbauelementen, in Steckkontaktiereinheiten. Diese können dann ebenso über den Adapter für eine Steckkontaktierung zugänglich gemacht sein.

In einer weiteren vorteilhaften Ausführungsform der erfindungsgemäßen elektrischen Maschine ist die Umrichtereinheit mittels des Zusammenfügens von Steckkontaktiereinheiten und Stecckontaktiergegenstücken an den im Gehäuse eingefügten oder eingepressten Stator angeschlossen. Zweckdienlicherweise sind also Steckkontaktiereinheiten und Steckkontaktiergegenstücke in ihrer Position und beispielsweise auch in ihrer Anzahl identisch. Hat der Umrichter seine Endposition im Gehäuse erreicht, stecken alle Buchsen und Stecker von Statoradapter und Umrichter ineinander. Dies vereinfacht und kompaktiert den Aufbau als auch die Montage.

Besonders vorteilhaft ist die Aufnahme für den Adapter entsprechend ausgelegt, dass mögliche Relativbewegungen von Stator und Umrichter ausgeglichen werden können, die Kontaktierung also nicht abbricht. Dies bewirkt eine zusätzliche Stabilisierung der Kontaktierung und erhöht deren Zuverlässigkeit und Langlebigkeit.

Das erfindungsgemäße Herstellungsverfahren für eine elektrische Maschine umfasst die folgenden Montageschritte: Anbringen der Leitungsenden der Wicklungsleitungen eines Stators an Steckkontaktiereinheiten in einem Adapter, axiales Einfügen oder Einpressen des Stators mit dem Adapter in ein Gehäuse, und axiales Einschieben einer Umrichtereinheit mit Steckkontaktiergegenstücken in das Gehäuse bis zu einer Endposition der Umrichtereinheit, in welcher Endposition Steckkontaktiereinheiten und Steckkontaktiergegenstücke so zusammengefügt sind, dass Stator und Umrichtereinheit kontaktiert sind.

Dieses Verfahren bietet den Vorteil, dass die axiale Montage des Umrichters in das Gehäuse zugleich zur Kontaktierung genutzt wird. Die Montage wird vereinfacht und automatisierbar.

Ein weiterer Vorteil besteht darin, dass bewährte Montageverfahren wie das Einpressen oder Einfügen verwendet werden können. Damit bleiben etablierte Abläufe erhalten. Des Weiteren wird die Komponentenanzahl reduziert.

Das Einpressen hat noch den zusätzlichen Vorteil für eine sehr gute Wärmeanbindung ans Gehäuse zu sorgen. Darüber hinaus sind alle vorgeschlagenen Montage- beziehungsweise Fixierungsmechanismen mechanischer Art. Die meisten davon stellen lösbare Verbindungen dar, die vorteilhaft für Reparatur und Rückbau sind.

In einer weiteren vorteilhaften Ausführungsform des erfindungsgemäßen Verfahrens erfolgt das Anbringen der Leitungsenden der Wicklungsleitungen des Stators an den Steckkontaktiereinheiten mittels Crimpen, Stecken oder Cage-Clamp. Die Verwendung gängiger Kontaktierungsverfahren kann an den Leitungsenden erfolgen, bevor der Stator in das Gehäuse eingefügt wird. Dadurch sind die Leitungsenden gut zugänglich. In einem ersten Schritt werden also die Statorleitungen der Wicklung und optional der Sensoren in den Adapter kontaktiert. Dies geschieht außerhalb des Motors, insbesondere an den dafür üblichen Schaltarbeitsplätzen. Der Adapter befindet sich also lose an den Leitungsenden oder fixiert am Statorwickelkopf, stirnseitig, oder fixiert an der Gehäuseinnenwand.

In einer weiteren vorteilhaften Ausführungsform des erfindungsgemäßen Verfahrens erfolgt zusätzlich der Montageschritt des Anbringens weiterer Leitungsenden des Stators an Steckkontaktiereinheiten, insbesondere Leitungsenden von Thermofühlern und/oder Anbauelementen. Diese Lösung unterscheidet sich von bekannten Methoden, bei denen manuelle Verkabelung und Montage erforderlich sind, indem sie einen Ein-Schritt-Prozess einführt, der die Effizienz der Montage und die Kompaktheit des Gesamtsystems verbessert.

In einer weiteren vorteilhaften Ausführungsform des erfindungsgemäßen Verfahrens wird nach dem Anbringen der Leitungsenden der Wicklungsleitungen des Stators an den Steckkontaktiereinheiten im Adapter, der Adapter mittels wenigstens einer Fixierungsgeometrie am Stator fixiert. Alternativ wird beispielsweise nach Einbringen des Stators in das Gehäuse, der Adapter in die Gehäuseöffnung motorinnenseitig eingesteckt und fixiert. Anschließend wird die Umrichtereinheit in das Gehäuse eingefügt.

In einer weiteren vorteilhaften Ausführungsform des erfindungsgemäßen Verfahrens wird bei dem oder nach dem axialen Einfügen oder Einpressen des Stators mit dem Adapter in das Gehäuse der Adapter mittels wenigstens einer Fixierungsgeometrie gehäuseinnenseitig am Gehäuse fixiert. Fixierungsgeometrien können als Aufnahmen, insbesondere Ausnehmungen oder Ausbuchtungen ausgestaltet werden, in welche ein entsprechendes Gegenstück eingeschoben oder eingepresst wird. Fixierungsgeometrien können auch als Auswölbungen, insbesondere Nasen, ausgestaltet sein, auf welche ein entsprechendes Gegenstück aufgeschoben oder aufgepresst wird.

In einer weiteren vorteilhaften Ausführungsform des erfindungsgemäßen Verfahrens wird bei dem axialen Einschieben der Umrichtereinheit mit Steckkontaktiergegenstücken in das Gehäuse der Adapter in eine Ausnehmung in der Umrichtereinheit eingefügt oder eingepresst.

Insbesondere erfolgt wenigstens einer der Montageschritte halbautomatisiert oder automatisiert. Durch die Schaffung der Steckkontaktschnittstelle in Form des erfindungsgemäßen Adapters, wird die Montage, insbesondere der Kontaktierungsschritt stark vereinfacht und dadurch automatisierbar.

Die Umrichter Anschlussbereiche befinden sich zweckdienlicherweise auf identischer Position der Anschlüsse des Kontaktier-Adapters, wodurch sie durch das Einbringen des Umrichters in diesen Adapter eingesteckt sind. Somit ist die Kontaktierung zwischen Stator und Umrichter hergestellt. Die Verschaltung von Stator-Anschlussleitungen und Umrichter Eingängen mit den Energieleitungen und Anschluss der Signalleitungen von Stator und Umrichter ist im Adapter realisiert. Der Adapter übernimmt also die zentrale Kontaktierung im Motorinnenraum von Stator/Motor und Umrichter. Eine Kontaktierung außerhalb des Motorinnenraumes im wie üblicherweise genutzten Klemmbrett-Bereich, vergleiche Figur 2, ist daher nicht notwendig. Kundenseitig sind somit nur einmalig die Anschlüsse für die Energieleitungen sowie optional die Signalleitungen erforderlich. Ein separater Anschluss von Motor und Umrichter ist daher kundenseitig nicht mehr notwendig.

Die vorgeschlagene Lösung hat das Potenzial, die Effizienz und Kosteneffektivität bei der Montage von elektrischen Antriebssystemen erheblich zu verbessern. Durch die Integration des Adapters könnte sie in bestehende und neue Motor-Umrichter-Kombinationen eingebaut werden, um den Platzbedarf zu reduzieren und die Austauschbarkeit zu erhöhen. Zudem führt die Lösung zu einer deutlichen Reduktion der Montagekosten und einer vereinfachten Wartung. Die erhöhte Kompaktheit des Antriebssystems erleichtert den Einbau in kleinere Maschinen. Die Austauschbarkeit der Komponenten führt zudem zu geringeren Ausfallzeiten und Wartungskosten.

### Figurenbeschreibung

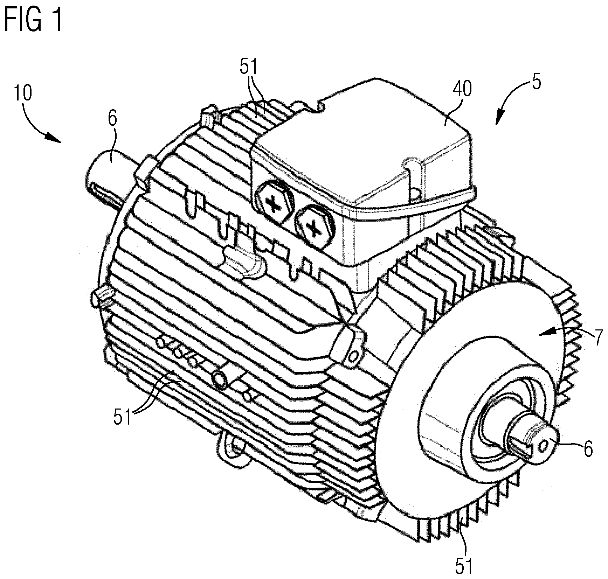

Beispiele und Ausführungsformen der vorliegenden Erfindung werden noch in exemplarischer Weise mit Bezug auf die Figuren 1 bis 6 der angehängten Zeichnung beschrieben. In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

Obwohl die Erfindung im Detail durch das bevorzugte Ausführungsbeispiel näher illustriert und beschrieben wird, ist sie nicht durch die offenbarten Beispiele eingeschränkt. Variationen hiervon können vom Fachmann abgeleitet werden, ohne den Schutzumfang der Erfindung, wie er durch die Patentansprüche definiert wird, zu verlassen.

Die Zeichnung zeigt schematisch:
- In Figur 1: eine elektrische Maschine 10, insbesondere einen Motor, mit motormontierten Umrichter in einem Klemmenkasten 40,
- in Figur 2: eine Kontaktierung, gemäß Stand der Technik, einer Energieleitung 41, von Signal- und Umrichteranschlüssen auf einem Klemmbrett auf einem Gehäuse 5,
- in Figur 3: einen Schnitt durch eine erfindungsgemäße elektrische Maschine 10, in der eine gehäuseintegrierte Umrichtereinheit 3 mittels eines Adapters 1 die Statorleitungen 22 kontaktiert,
- in Figur 4: den Adapter 1 in einem vergrößerten Ausschnitt aus Figur 3,
- in Figur 5: eine teilperspektivische Darstellung der Komponenten Stator 2, Umrichtereinheit 3 und Adapter 1 entlang ihrer Montageachse und
- in Figur 6: eine Draufsicht Z auf die Anschlussseite der Umrichtereinheit 3 und die Stecckontaktiergegenstücke 13.

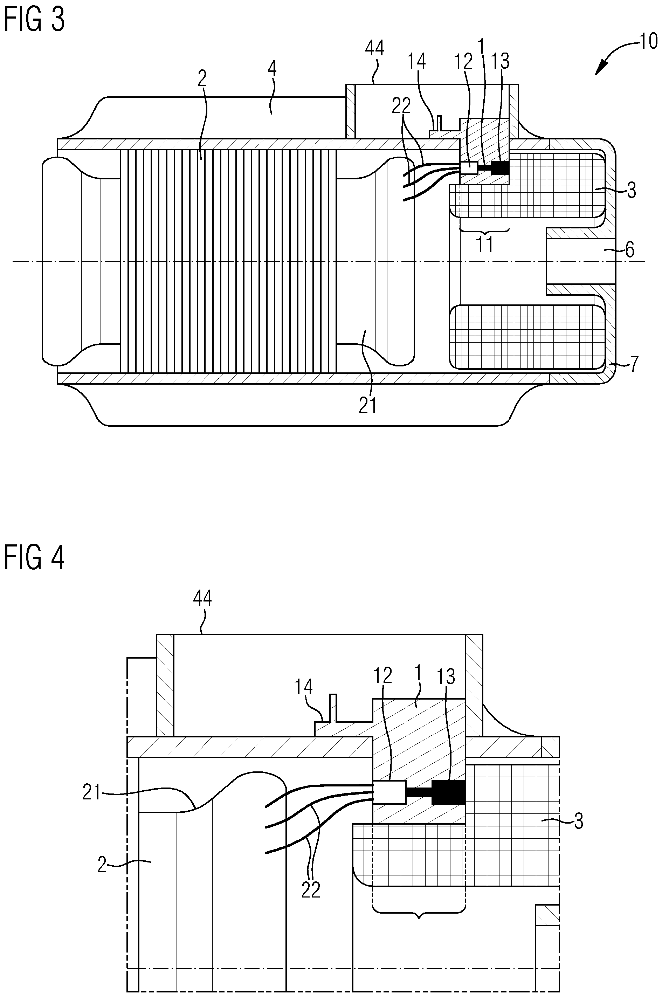

In der Figur 1 ist zunächst eine perspektivische Darstellung der Außenansicht einer elektrischen Maschine 10 in einem Gehäuse 5 gezeigt, mit einer Lageraufnahme am Boden des Lagerschildes 7. Beidseitig ragt die Welle 6 aus dem Gehäuse 5. Auf der Stator-Seite, vergleiche Figur 3, wird die Arbeitsmaschine, wie z.B. ein Kompressor oder eine Pumpe an die Welle 6 angeschlossen. Auf der Seite des Lagerschildes 7 sind modulartige Anbauten wie eine Bremseinheit, Fremdlüftermodul, oder ein Geber bzw. Drehimpulsgeber anbringbar. Es sind Kühlrippen 51 an der Gehäuseaußenwand gezeigt. Der Klemmenkasten 40 ist kleiner dimensioniert dargestellt, als für bisher übliche Klemmbretter notwendig, vergleiche Figur 2. Der Klemmenkasten 40 ist durch Einsatz der erfindungsgemäß vorgeschlagenen Lösung noch weiter verkleinerbar bis hin zu gar nicht mehr von Bedarf.

*In* *Figur 2* *ist eine Kontaktierung, gemäß Stand der Technik, einer Energieleitung 41, von Signal und Umrichteranschlüssen auf einem Klemmbrett gezeigt, wie es bisher üblich, außen auf einem Gehäuse 5 angebracht ist.* Für den elektrischen Anschluss von elektrischen Maschinen 10, beispielsweise Elektromotoren werden an die Enden der Wicklungsphasen Anschlussleitungen 22 elektrisch kontaktiert. Besonders interessant ist die vorgeschlagene Lösung für Drehstromasynchron -bzw. Drehstromsynchronmotoren. Die Kontaktierung erfolgt über Verfahren wie z.B. crimpen, löten oder schweißen. An den Enden der Anschlussleitungen 41 befinden sich üblicherweise Kabelschuhe. Diese Leitungen werden bisher händisch durch eine Gehäuseöffnung üblicherweise auf das Klemmenbrett im Anschlusskasten 40 geführt, um die Anschlüsse dem Kunden benutzerfreundlich bereit zu stellen.

Bei dezentralen, sogenannten wandmontierten Umrichter-Ausführungen erfolgt der Anschluss zwischen Umrichter 3 und Stator 2 über eine Zuleitung zum Klemmenbrett. Bei integrierten, sogenannten aufgesetzten bzw. motormontierten Umrichter-Ausführungen, wie beispielsweise in Figur 2 gezeigt, werden bisher die Anschlussleitungen 41 durch die Gehäuseöffnung direkt zum Umrichter 3 geführt. Die Anschlussleitungen für die Netzspannung 41 sind dabei üblicherweise mit Aderendhülsen ausgeführt, die Kontaktierung erfolgt mittels Lüsterklemmen oder Cage-Clamp-Kontakten.

Zusätzlich zu den Spannungsanschlussleitungen 41 gibt es optional die Möglichkeit weiterer Leitungen 46, 47, zum Beispiel für die thermische Motorüberwachung 46 oder andere Einbauteile, wie z.B. eine Stillstandsheizung, welche ebenfalls händisch durch die Gehäuseöffnung in den Anschlusskasten 40 bzw. direkt in den motormontierten Umrichter 3 geführt werden können. Im Anschlusskasten 40 erfolgen Anschlüsse üblicherweise auf Lüsterklemme.

Des Weiteren sind in Figur 2 Anschlüsse für den Motor 42, Anschlüsse für Digitaleingänge und - ausgänge 43, Anschlüsse für eine 24 Volt-Netzteil 44, geschaltet/ungeschaltet, Anschlüsse für DIP-Schalter 45 (Dual In-line Package Schalter), Anschlüsse für Motortemperatursensor 46, Anschlüsse für einen Bremswiderstand 47 sowie Anschlüsse für eine EM-Bremse 48, zum Beispiel 180 V, gezeigt.

Die vorgeschlagene Lösung vermeidet vorteilhaft den bisher großen manuellen Aufwand, die Ständerleitungen und zusätzliche Leitungen von der Wicklung durch die Gehäuseöffnung zu führen, und reduziert demnach, besonders bei kleineren Baugrößen, die bislang unverhältnismäßig hohen Montagekosten.

In Figur 3 ist ein Schnitt durch eine erfindungsgemäße elektrische Maschine 10 gezeigt, in der eine Umrichtereinheit 3 mittels eines Adapters 1 die Statorleitungen 22 kontaktiert.

Die vorgeschlagene Lösung basiert auf einem im Motor- beziehungsweise Gehäuseinnenraum integrierten Umrichter 3. Dabei ist der Umrichter 3 beispielsweise im Gehäuse 5 in axialer Richtung hinter dem Stator 2 mit Wicklung 21 montiert oder im Lagerschild 7 integriert. Auch eine kombinierte Lösung, dass die Umrichtereinheit 3 teilweise im Gehäuse 5 und teilweise im Lagerschild 7 positioniert ist, ist denkbar. Die Figur 3 zeigt einen Stator 2 mit Statorleitungen 22 und daran montierten Steckkontakteinheiten 12. Der Stator 2 ist im Gehäuse 5 mit der Umrichtereinheit 3 kontaktiert. Dazu weist die Umrichtereinheit 3 Steckkontaktgegenstücke 13 auf. Kern der vorgeschlagenen Lösung ist ein Adapter 1, insbesondere in baulich kompakter Form, in welchem die Steckkontakteinheiten 12 sitzen und welcher die Stator-Anschlussleitungen 22 und optional weitere Steuer- und/oder Sensorleitungen aufweist. Des Weiteren ist der Adapter 1 ausgestaltet, die Umrichteranschlüsse 13 aufzunehmen, zu kontaktieren und entsprechend zu verschalten. Der Adapter 1 befindet sich im Motorinnenraum, insbesondere in oder unterhalb der Gehäuseöffnung zum Klemmenkasten 40, vergleiche Figur 1. Die Figur 4 zeigt den Adapterausschnitt aus Figur 3 vergrößert.

Bei der Montage werden im ersten Schritt die Statorleitungen 22 der Wicklung 21 und der Sensoren in den Adapter 1 kontaktiert. Dies geschieht zweckdienlicherweise noch außerhalb des Gehäuses 5 an den dafür üblichen Schaltarbeitsplätzen. Der Adapter 1 befindet sich also lose an den Leitungsenden oder fixiert am Statorwickelkopf 21 stirnseitig. Nach Einbringen des Stators 2 in das Gehäuse 5 wird der Kontaktier-Adapter 1 im Gehäuse 5 innenseitig fixiert. Anschließend wird der im Gehäuseinnenraum integrierte Umrichter 3 in das Gehäuse 5 eingefügt. Die Umrichteranschlussbereiche 13 befinden sich auf identischer Position der Anschlüsse des Kontaktier-Adapters 12, wodurch sie durch das Einschieben des Umrichters 3 in diesen Adapter 1 eingesteckt werden. Somit ist die Kontaktierung zwischen Stator 2 und Umrichter 3 hergestellt. Die Verschaltung von Stator-Anschlussleitungen 22 und Umrichtereingängen 13 mit den Energieleitungen und, je nach Ausführungsform auch der Anschluss der Signalleitungen von Stator 2 und Umrichter 3 ist im Adapter 1 realisiert. Der Adapter 1 übernimmt also die zentrale Kontaktierung im Motorinnenraum von Stator 2 und Umrichter 3. Eine aufwendige Herausführung der Kontaktierung aus dem Gehäuse 5 heraus ist daher nicht notwendig. Kundenseitig sind somit nur die Anschlüsse für die Energieleitungen 41 erforderlich. Eine separate Verkabelung wird eliminiert und dadurch der Platzbedarf im Anschlussbereich minimiert.

Die vorgeschlagene Lösung führt einen Adapter 1 in Form einer Steckkontakteinheit im Motorinnenraum ein, der die Verbindung zwischen den Statoranschlussleitungen 22 und dem Umrichter 3 direkt herstellt. Dies reduziert zudem die Montagekosten und erhöht die Kompaktheit des Antriebssystems.

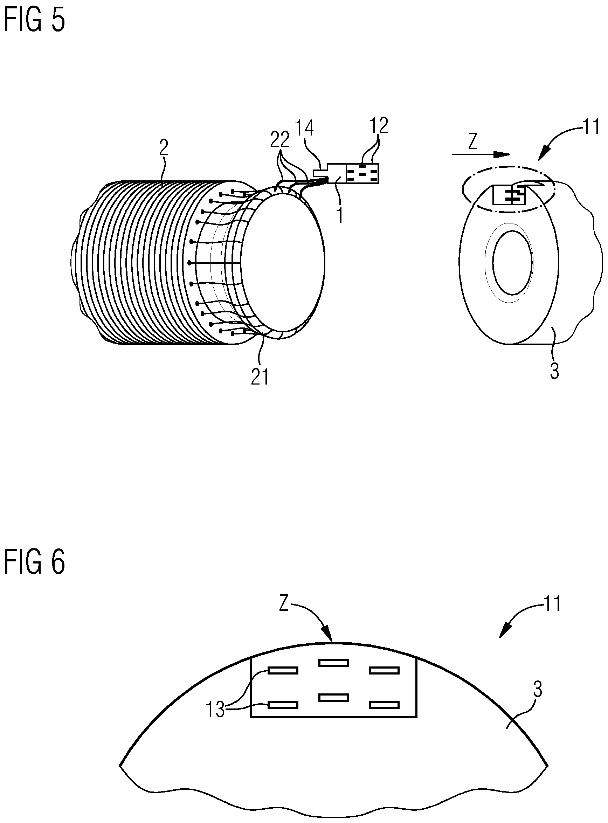

In Figur 5 ist eine teilperspektivische Darstellung der Komponenten Stator 2, Umrichtereinheit 3 und Adapter 1 entlang ihrer Montageachse gezeigt. Figur 6 zeigt eine Draufsicht Z auf die Anschlussseite der Umrichtereinheit 3 und die Steckkontaktiergegenstücke 13, wie in Figur 5 durch den Pfeil Z angezeigt.

Der wesentliche Vorteil der vorgeschlagenen Lösung liegt in der Zusammenführung von Kontaktierung und Verdrahtung der Stator- und Umrichteranschlüsse in einem einzigen Prozessschritt und in einem Adapterbauteil 1. Durch das Einfügen des Umrichters 3 in das Gehäuse 5 wird die Kontaktierung automatisch hergestellt, sodass ein Anschluss des Umrichters 3 außerhalb des Motorraums 5 nicht mehr erforderlich ist. Kundenseitig müssen lediglich die drei Energieleitungen 41 sowie nach Anwendung Signal- und/oder Steuerleitungen angeschlossen werden. Der Aufwand zum Anschluss des Adapters 1 an den Stator 2 ist dabei nahezu identisch mit dem Standardprozess, bei dem Leitungen angeklemmt oder Kabelschuhe angebracht werden.

Ein weiterer Vorteil besteht darin, dass die Herausführung der Statorleitungen 22 aus dem Gehäuse heraus entfällt, was zu einer erheblichen Reduzierung des Bauraums im Anschlussbereich führt. Dadurch können Kosten für zusätzliche Komponenten wie einen Hilfsklemmkasten und dessen Montage eingespart werden. Zusammengefasst bietet die vorgeschlagene Lösung Vorteile bei der Kontaktierung und Montage, dass diese in einem einzigen Prozessschritt erfolgen. Die Lösung bewirkt eine Kostenreduktion durch die Verringerung der Prozessschritte. Zusätzliche Anbauteile, wie beispielsweise ein Hilfsklemmbrett, entfallen, was weitere Kosten spart. Das manuelle Handling der Leitungen, wie Kabeldurchführung und Anschlussarbeiten im Klemmkasten, wird reduziert. Für den Kunden wird der Anschluss einfacher und schneller.

Vorgeschlagen wird also eine elektrische Maschine 10, insbesondere eine Drehstromasynchron- oder eine Drehstromsynchronmaschine, und ein Verfahren zur Montage einer elektrischen Maschine 10. Diese Maschine umfasst einen Stator 2 mit Wicklungsleitungen 22, deren Leitungsenden in Steckkontaktiereinheiten 12 münden, die in einem gehäuseintegrierten Adapter 1 untergebracht sind. Darüber hinaus beinhaltet die Maschine eine gehäuseintegrierte Umrichtereinheit 3, insbesondere eine im Lagerschild integrierte Umrichtereinheit 3, die entsprechende Steckkontaktiergegenstücke 13 aufweist. Es wird ein Herstellungsverfahren für diese elektrische Maschine 10 angegeben, in dem zunächst die Leitungsenden der Wicklungsleitungen 22 des Stators 2 an die Steckkontaktiereinheiten 12 im Adapter 1 angebracht werden. Anschließend wird der Stator 2 mit dem Adapter 1 axial in das Gehäuse 5 eingefügt oder eingepresst und der Adapter am Stator stirnseitig oder an der Gehäuseinnenwand fixiert. Danach wird die Umrichtereinheit 3 mit den Steckkontaktiergegenstücken 13 axial in das Gehäuse 5 eingeschoben, bis eine Endposition erreicht ist, in der die Steckkontaktiereinheiten 12 und die Steckkontaktiergegenstücke 13 so zusammengefügt sind, dass der Stator 2 und die Umrichtereinheit 3 kontaktiert sind.

### Bezugszeichenliste

- 10: elektrische Maschine
- 1: Adapter
- 11: Aufnahme für Adapter
- 14: Fixiergeometrien
- 2: Stator
- 21: Wicklungssystem, beziehungsweise Statorwickelkopf des Wicklungssystems
- 22: Statorleitungen
- 12: Steckkontaktiereinheit, zum Beispiel Buchsen
- 3: Umrichtereinheit
- 13: Steckkontakiergegenstücke, zum Beispiel Steckkontakte (Pins)
- 40: Klemmenkasten, Gehäuseöffnung
- 5: (Motor)gehäuse
- 51: Kühlrippen
- 6: Welle
- 7: Lagerschild
- 41: Anschlüsse Netzspannung
- 42: Anschlüsse Motor
- 43: Anschlüsse Digitaleingänge/-ausgänge
- 44: Anschlüsse Netzteil
- 45: DIP-Schalter
- 46: Anschlüsse Temperatursensor
- 47: Anschlüsse Bremswiderstand
- 48: Anschlüsse EM-Bremse

## Patentansprüche

1. Elektrische Maschine (10), insbesondere Drehstromasynchron- oder Drehstromsynchronmaschine, in einem Gehäuse (5) umfassend
einen Stator (2) umfassend Wicklungsleitungen (22), deren Leitungsenden in Steckkontaktiereinheiten (12) in einem gehäuseintegrierten Adapter (1) münden,
eine gehäuseintegrierte Umrichtereinheit (3), insbesondere eine lagerschildintegrierte Umrichtereinheit (3), welche Steckkontaktiergegenstücke (13) aufweist.

2. Elektrische Maschine (10) nach Anspruch 1, wobei der Stator (2) in das Gehäuse (5) eingefügt oder eingepresst ist.

3. Elektrische Maschine (10) nach Anspruch 1 oder 2, wobei der Adapter (1) zur Gehäuseöffnung (40) hin Anschlüsse für die Energieleitungen (41) bereitstellt.

4. Elektrische Maschine (10) nach einem der vorstehenden Ansprüche, wobei der Adapter (1), wenigstens eine Fixierungsgeometrie (14) aufweist, mittels welcher der Adapter am Stator (2) fixiert ist und/oder wobei der Adapter (1), wenigstens eine Fixierungsgeometrie (14) aufweist, mittels welcher der Adapter gehäuseinnenseitig am Gehäuse (5) fixiert ist.

5. Elektrische Maschine (10) nach einem der vorstehenden Ansprüche, wobei die lagerschildintegrierte Umrichtereinheit (3), eine Ausnehmung (11) aufweist, in welcher die Steckkontaktiergegenstücke (13) angebracht sind.

6. Elektrische Maschine (10) nach einem der vorstehenden Ansprüche, wobei der Adapter (1) in die Ausnehmung (11) in der Umrichtereinheit (3) eingefügt oder eingepresst ist.

7. Elektrische Maschine (10) nach einem der vorstehenden Ansprüche, wobei die Stecckontaktiereinheiten (12) Buchsen, insbesondere Kunststoffbuchsen aufweisen und die Stecckontaktiergegenstücke (13) Pins, insbesondere Kupferpins aufweisen oder die Steckkontaktiereinheiten (12) Pins, insbesondere Kupferpins aufweisen und die Steckkontaktiergegenstücke (13) Buchsen, insbesondere Kunststoffbuchsen aufweisen.

8. Elektrische Maschine (10) nach einem der vorstehenden Ansprüche, wobei weitere Leitungsenden in Steckkontaktiereinheiten (12) münden, insbesondere Leitungsenden von Thermofühlern und/oder Anbauelementen.

9. Elektrische Maschine (10) nach einem der vorstehenden Ansprüche, wobei die Umrichtereinheit (3) mittels des Zusammenfügens von Steckkontaktiereinheiten (12) und Steckkontaktiergegenstücken (13) an den im Gehäuse (5) eingefügten oder eingepressten Stator (2) angeschlossen ist.

10. Herstellungsverfahren für eine elektrische Maschine (10) nach einem der vorstehenden Ansprüche, umfassend die Montageschritte:
- Anbringen der Leitungsenden der Wicklungsleitungen (22) eines Stators (2) an Stecckontaktiereinheiten (12) in einem Adapter (1),
- Axiales Einfügen oder Einpressen des Stators (2) mit dem Adapter (1) in ein Gehäuse (5),
- Axiales Einschieben einer Umrichtereinheit (3) mit Steckkontaktiergegenstücken (13) in das Gehäuse (5) bis zu einer Endposition der Umrichtereinheit (3), in welcher Endposition Steckkontaktiereinheiten (12) und Steckkontaktiergegenstücken (13) so zusammengefügt sind, dass Stator (2) und Umrichtereinheit (3) kontaktiert sind.

11. Herstellungsverfahren nach Anspruch 10, wobei das Anbringen der Leitungsenden der Wicklungsleitungen (22) des Stators (2) an den Steckkontaktiereinheiten (12) mittels Crimpen, Stecken oder Cage-Clamp erfolgt.

12. Herstellungsverfahren nach Anspruch 10 oder 11, wobei zusätzlich der Montageschritt des Anbringens weiterer Leitungsenden des Stators (2) an Steckkontaktiereinheiten (12) erfolgt, insbesondere Leitungsenden von Thermofühlern und/oder Anbauelementen.

13. Herstellungsverfahren nach einem der Ansprüche 10 bis 12, wobei nach dem Anbringen der Leitungsenden der Wicklungsleitungen (22) des Stators (2) an den Steckkontaktiereinheiten (12) im Adapter (1), der Adapter (1) mittels wenigstens einer Fixierungsgeometrie (14) am Stator (2) fixiert wird.

14. Herstellungsverfahren nach einem der Ansprüche 10 bis 13, wobei bei dem oder nach dem axialen Einfügen oder Einpressen des Stators (2) mit dem Adapter (1) in das Gehäuse (5), der Adapter (1) mittels wenigstens einer Fixierungsgeometrie (14) gehäuseinnenseitig am Gehäuse (5) fixiert wird.

15. Herstellungsverfahren nach einem der Ansprüche 10 bis 14, wobei bei dem axialen Einschieben der Umrichtereinheit (3) mit Steckkontaktiergegenstücken (13) in das Gehäuse (5), der Adapter (1) in eine Ausnehmung (11) in der Umrichtereinheit (3) eingefügt oder eingepresst wird.
